# EUROPÄISCHE PATENTSCHRIFT

(11) **EP 0 548 734 B1**
(45) Veröffentlichungstag und Bekanntmachung des Hinweises auf die Patenterteilung: **19.03.1997**
(21) Anmeldenummer: 92121274.2
(22) Anmeldetag: 15.12.1992
(51) Int. Cl.: E01B 7/14, E01B 9/68, F16F 1/36, F16F 9/30

(54) **Unterlage für einen beweglichen Oberbaugleisabschnitt**
Support element for the moving part of a railway switch
Support pour la part mobile des appareils de voie ferrée

(30) Priorität: 20.12.1991 DE 4142276
(43) Veröffentlichungstag der Anmeldung: 30.06.1993
(73) Patentinhaber: BWG Butzbacher Weichenbau GmbH, D-35510 Butzbach (DE)
(72) Erfinder: Benenowski, Sebastian, D-35510 Butzbach (DE); Demmig, Albrecht, Dipl.-Ing., D-14776 Brandenburg (DE); Dietze, Hans-Ulrich, Dr.-Ing., D-14789 Wusterwitz (DE); Kais, Alfred, D-35423 Lich-Eberstadt (DE); Nuding, Erich, Dipl.-Ing. (FH), D-73434 Aalen (DE)
(74) Vertreter: Stoffregen, Hans-Herbert, Dr. Dipl.-Phys.

(56) Entgegenhaltungen:
- EP-A- 0 011 285
- EP-A- 0 282 796
- EP-A- 0 364 756
- DE-A- 3 234 469
- FR-A- 2 398 841

## Beschreibung

Die Erfindung bezieht sich auf eine Unterlage für einen beweglichen Oberbaugleisabschnitt, insbesondere Herzstückblock eines federbeweglichen Herzstücks oder Zungenvorrichtung, dem auf einer ersten Platte wie Ripppenplatte ausgehende Schienenabschnitte wie Flügelschienen zugeordnet sind.

Bei den heutzutage üblichen federbeweglichen Herzstücken wird der Herzstückblock zwischen Flügelschienen auf einer Stahlplatte abgestützt, auf der die Flügelschienen selbst verspannt sind. Insbesondere durch Fertigungstoleranzen bedingt bildet sich zwischen dem Herzstückblock und der Platte ein mehr oder weniger großer Spalt aus, so daß beim Durchfahren eines Zuges und die damit hervorgerufenen Schwingungen der Block auf die Platte schlägt. Hierdurch erfolgt einerseits eine mechanische Belastung - sowohl des Herzstückblocks und dessen Unterlage in Form der Platte als auch der Räder selbst - und andererseits eine störende Geräuschbildung.

Der EP 0 364 756 A2 ist ein Schienenabschnitt zu entnehmen, der unmittelbar auf einer elastischen Zwischenlage abgestützt ist, um Geräuschbildungen zu unterbinden. Ferner ist der Schienenabschnitt unmittelbar auf der elastischen Zwischenlage und nicht auf einer als Gleitplatte wirkenden Platte abgestützt.

Eine Dämpfungsvorrichtung insbesondere bestimmt für Motorabstützung von Kraftfahrzeugen, Radaufhängungen von Kraftfahrzeugen oder Aufhängungen von Trommeln von Waschmaschinen ist der DE 32 34 469 A1 zu entnehmen. Dabei umfaßt die Dämpfungsvorrichtung ein viskoelastisches Medium, das einen abgeschlossenen, veränderlichen Raum vollständig ausfüllt. Das Dämpfungsmedium weist bei langsamen Verformungsgeschwindigkeiten ein flüssiges oder plastisches Verhalten und bei Stoßbelastungen ein elastisches Verhalten auf.

Der vorliegenden Erfindung liegt das Problem zugrunde, eine Unterlage der eingangs genannten Art so weiterzubilden, daß trotz vorhandener Fertigungstoleranzen sowohl die mechanische Belastung reduziert als auch Geräusche gedämpft werden.

Das Problem wird einerseits erfindungsgemäß dadurch gelöst, daß die Unterlage eine den Oberbaugleisabschnitt abstützende zweite Platte sowie Zwischenlage umfaßt, die aus einem eine lastabhängige Federsteifigkeit aufweisenden Material derart besteht, daß bei statischer Belastung eine kleine Federsteifigkeit und bei dynamischer Belastung eine große Federsteifigkeit vorliegt. Andererseits wird das Problem dadurch gelöst, daß die Unterlage derart fluidgelagert ist, daß bei statischer Belastung eine gewünschte vertikale Verstellung erfolgt und bei dynamischer Belastung eine Unverstellbarkeit gegeben ist.

Nach dem zuerst genannten Lösungsvorschlag wird ein Material in Form eines Dämpfungswerkstoffes vorgeschlagen, das in Abhängigkeit der auf diesem wirkenden Kräfte weich oder hart ist. Das Material ist dann weich, weist also eine geringe Federsteifigkeit auf, wenn nur statische Belastungen auftreten, also solche, die im wesentlichen durch das Eigengewicht des Oberbaugleisabschnitts wie Herzstückblock oder Zunge hervorgerufen werden. Der Dämpfungswerkstoff ist jedoch hart, weist also eine große Federsteifigkeit auf, wenn eine dynamische Belastung erfolgt, wobei die Steifigkeit z. B. mit der Zunahme der in den Oberbaugleisabschnitt eingeleiteten Schwingungsfrequenz zunimmt. Eine solche dynamische Belastung tritt dann auf, wenn der mit den erfindungsgemäßen Unterlagen versehene Oberbau von einem Schienenfahrzeug durchfahren wird.

Durch die erfindungsgemäße Lehre kann folglich eine Selbstnivellierung der Unterlagen in bezug auf den auf diese sich abstützenden Oberbaugleisabschnitt erfolgen, wodurch sichergestellt wird, daß sich zwischen diesem und den Unterlagen ein ansonsten zu mechanischen Belastungen und Geräuschbildungen führender Spalt vermieden wird.

Dabei kann das die lastabhängige Federsteifigkeit aufweisende Material aus Kunststoff bestehen, auf dem wiederum vorzugsweise eine aus Stahl bestehende Platte angeordnet bzw. in diesem eingelassen ist, um als Abstützung für den Oberbaugleisabschnitt zu dienen.

Die erfindungsgemäße Unterlage kann demnach aus einer die lastabhängige Federsteifigkeit aufweisenden Zwischenlage mit von dieser ausgehender vorzugsweise aus Stahl bestehender Gleitplatte bestehen, auf der der Oberbaugleisabschnitt abgestützt ist.

Nach einer weiteren Ausgestaltung der Erfindung ist die Unterlage, und zwar vorzugsweise die Zwischenlage in der Platte wie Rippenplatte eingespannt oder eingepreßt. Dabei kann sich die Zwischenlage gegebenenfalls abschnittsweise unterhalb der von der Platte ausgehenden Schienenabschnitte erstrecken. Hierdurch ergibt sich eine optimale Lagefixierung.

Nach dem alternativen Lösungsvorschlag werden die beweglichen Oberbaugleisabschnitte mittelbar oder unmittelbar auf einem Fluid wie Hydraulikflüssigkeit gelagert, das gleichfalls einen automatischen Niveauausgleich ermöglicht. Dabei gehen die die Unterlagen in der gewünschten Position haltenden Fluide von Speicherbehältern aus, die einen vorzugsweise federvorgespannten Kolben aufweisen, durch den die Druckbeaufschlagung auf das Fluid und damit auf die Unterlage zu dessen Höhenausrichtung erfolgt.

Der Speicherbehälter oder eine Zuleitung zu diesem weist eine Drossel oder ein Rückschlagventil auf, durch das dann ein Rückfluß von Fluiden aus einer Kammer, die der Unterlage zugeordnet ist, verhindert wird, wenn auf die Unterlage eine dynamische Belastung erfolgt. Andernfalls kann das Fluid durch die Drossel bzw. das Rückschlagventil ungehindert strömen, um so die erwähntermaßen erfindungsgemäß gewünschte Nivellierung der Unterlage derart auf den Oberbaugleisabschnitt zu ermöglichen, daß eine automatische Anpassung an die Geometrie des entsprechenden Oberbaugleisabschnitts, also des Bauteils unter Berücksichtigung dessen Eigensteifigkeit sowie stationärer Abstützungen, die als Fixpunkte dienen, erfolgt.

Die Fixpunkte können dabei einerseits die Einspannstelle des Oberbaugleisabschnittes und andererseits die Abstützung in seinem freien vorderen Ende sein.

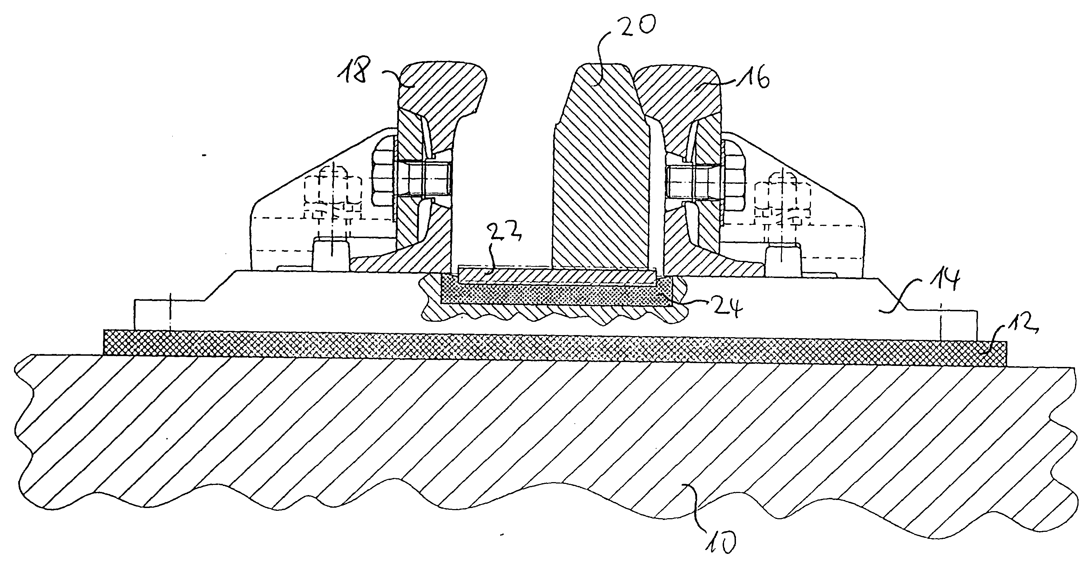

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

In der einzigen Figur ist rein beispielhaft ein Schnitt durch ein federbewegliches Herzstück dargestellt, ohne daß hierdurch eine Beschränkung der erfindungsgemäßen Lehre erfolgen soll. Vielmehr kann diese überall dort zur Anwendung gelangen, wo ein beweglicher Gleisabschnitt abgestützt werden soll, also z. B. auch im Zungenbereich.

Auf einer Schwelle (10) ist gegebenenfalls über eine aus elastischem Material bestehenden Zwischenlage (12) eine Rippenplatte (14) befestigt, von der in gewohnter Weise Flügelschienen (16) und (18) ausgehen. Hierzu sind übliche Einspannvorrichtungen vorgesehen, auf die nicht näher einzugehen ist.

Zwischen den Flügelschienen (16) und (18) ist ein Herzstückblock (20) beweglich angeordnet. Der Herzstückblock (20) ist einerseits auf einer Gleitplatte (22) verschiebbar angeordnet, die von einer Zwischenlage (24) ausgeht, die ihrerseits in der Rippenplatte (14) eingelassen ist. Dabei erstreckt sich die Zwischenlage (24) mit ihren Längsrändern unterhalb der Füße der Flügelschienen (16) und (18), um so eine sichere Lagefixierung zu ermöglichen. Die Zwischenlage (24) kann des weiteren in der Rippenplatte (14) eingepreßt oder sonstwie fest eingespannt sein.

Die Gleitplatte (22) kann in geeigneter Weise in der Zwischenlage (24) lagefixiert werden, wobei auch ein teilweises Einvulkanisieren in Frage kommt.

Da der Herzstückblock (20) über eine große Länge von z. B. bis zu 15 oder sogar 20 m verschiebbar auf zueinander beabstandeten Unterlagen abgestützt ist, muß sichergestellt sein, daß trotz vorhandener Fertigungstoleranzen auf jeder Unterlage ein Abstützen erfolgt, daß sich also ein Spalt nicht ausbildet, wodurch andernfalls eine erhöhte mechanische Belastung und eine Geräuschbildung erfolgen würde.

Um dieses Abstützen sicherzustellen, erfolgt erfindungsgemäß eine automatische Höhenanpassung der aus der Zwischenlage (24) und der Gleitplatte (22) bestehenden Unterlagen, die der Geometrie des Bauteils, also des Herzstückblocks (20), dessen Eigensteifigkeit sowie den fest vorgegebenen AbstützpunktenRechnung trägt.

Von den Abstützpunkten, die auch als Fixpunkte bezeichnet werden können, ist einer derjenige, in dem das Bauteil fest eingespannt ist. Der andere Fixpunkt befindet sich im vorderen freien Ende des beweglichen Teils des Herzstückblocks. Zwischen diesen Fixpunkten erfolgt erwähntermaßen eine automatische Anpassung an den Höhenverlauf der Unterseite des Herzstückblocks (20).

Im Ausführungsbeispiel erfolgt diese automatische Anpassung der Unterlage dadurch, daß die Zwischenlage (24) aus einem Dämpfungswerkstoff besteht, der eine lastabhängige Federsteifigkeit zeigt. Dabei weist die Zwischenlage (24) bei einer statischen Belastung, die im wesentlichen durch das Eigengewicht des Herzstückblocks (20) hervorgerufen wird, eine geringe Federsteifigkeit auf, ist also weich. Hierdurch ist die Niveauanpassung möglich.

Treten jedoch dynamische Kräfte, die durch einen den Schienenbereich durchfahrenden Zug hervorgerufen werden, auf, so weist der Dämpfungswerkstoff der Zwischenlage (24) eine große Federsteifigkeit auf, ist also hart. In diesem Fall kann die Zwischenlage (24) den auftretenden Kräften nicht ausweichen, so daß infolgedessen der Herzstückblock (20) in seiner Höllenlage verharrt.

Das Zwischenlagenmaterial kann aus Kunststoff oder anderen geeigneten Materialien bestehen, die die zuvor beschriebenen Federsteifigkeits-Charakteristika aufweisen.

Alternativ besteht die Möglichkeit, daß die Platte (22) z. B. mittelbar oder unmittelbar auf einer Hydraulikflüssigkeit ruht, die über eine Drossel oder ein Rückschlagventil einem Hydraulikflüssigkeitsspeicher zuführbar ist, der seinerseits über einen federvorgespannten Kolben druckbeaufschlagbar ist. Hierbei erfolgt gleichfalls im statischen Zustand eine selbstregulierende Höhenanpassung der Gleitplatten (22) in bezug auf die Unterseiten der Herzstückblöcke (20) derart, daß ein spaltfreies Anliegen erfolgt. Tritt dagegen eine dynamische Belastung auf, so kann die Hydraulikflüssigkeit die Drossel bzw. das Rückschlagventil nicht passieren, so daß ein Entweichen unterhalb der Unterlageplatte (22) nicht möglich ist, diese also höhenmäßig nicht verstellt werden kann.

## Patentansprüche

1. Unterlage (22, 24) für einen beweglichen Oberbaugleisabschnitt, insbesondere Herzstückblock (20) eines federbeweglichen Herzstückes oder Zungenvorrichtung, dem von einer ersten Platte (14) wie Rippenplatte ausgehende Schienenabschnitte wie Flügelschienen (16, 18) zugeordnet sind,
**dadurch gekennzeichnet,**
daß die Unterlage eine den Oberbaugleisabschnitt (20) abstützende zweite Platte (22) sowie eine Zwischenlage (24) umfaßt, die aus einem eine lastabhängige Federsteifigkeit aufweisenden Material derart besteht, daß bei statischer Belastung eine kleine Federsteifigkeit und bei dynamischer Belastung eine große Federsteifigkeit vorliegt.

2. Unterlage für einen beweglichen Oberbaugleisabschnitt, insbesondere Herzstückblock eines federbeweglichen Herzstückes oder Zungenvorrichtung, dem von einer ersten Platte wie Rippenplatte ausgehende Schienenabschnitte wie Flügelschienen zugeordnet sind,
**dadurch gekennzeichnet,**
daß die Unterlage derart fluidgelagert ist, daß bei statischer Belastung eine gewünschte vertikale Verstellung erfolgt und bei dynamischer Belastung eine Unverstellbarkeit gegeben ist.

3. Unterlage nach Anspruch 1 oder 2,
**dadurch gekennzeichnet,**
daß der Oberbaugleisabschnitt (20) auf mehreren in Längsrichtung des Oberbaugleisabschnitts hintereinander angeordneten zweiten Platten (22) wie Gleitplatten angeordnet ist, die ihrerseits auf den Zwischenlagen (24) angeordnet sind, wobei die Zwischenlagen bei statischer Belastung derart selbsttätig vertikal verstellbar sind, daß unter Berücksichtigung der Oberbaugleisabschnittsgeometrie und der Eigensteifigkeit des Oberbaugleisabschnitts dieser spaltfrei auf den zweiten Platten angeordnet ist.

4. Unterlage nach zumindest einem der vorhergehenden Ansprüche,
**dadurch gekennzeichnet,**
daß die Unterlage, vorzugsweise deren Zwischenlage (24), in der ersten Platte wie Rippenplatte (14) eingespannt oder eingepreßt ist.

5. Unterlage nach zumindest einem der vorhergehenden Ansprüche,
**dadurch gekennzeichnet,**
daß sich die Unterlage, vorzugsweise deren Zwischenlage (24), abschnittsweise unterhalb der Schienenabschnitte wie Flügelschienen (16, 18) erstreckt.

6. Unterlage nach zumindest Anspruch 2,
**dadurch gekennzeichnet,**
daß die Unterlage mittelbar oder unmittelbar über ein Fluid wie Hydraulikflüssigkeit abgestützt ist, das vom unterhalb der Unterlage vorhandenen Bereich über eine Drossel oder ein Rückschlagventil einem Pufferbehälter zuführbar ist, der seinerseits über einen federvorgespannten Kolben druckbeaufschlagbar ist.

## Claims

1. Support element (22, 24) for the moving part of a railway switch, in particular a crossing block (20) of a spring-movable crossing or switch device, assigned to which are rail sections such as wing rails (16, 18) issuing from a first plate (14) such as a ribbed plate, characterized in that the support element comprises a second plate (22) supporting the part of the railway switch (20) and a spacer (24), which consists of a material exhibiting a load-dependent spring stiffness such that in the event of static loading a small spring stiffness is present and in the event of dynamic loading a great spring stiffness is present.

2. Support element for a moving part of a railway switch, in particular a crossing block of a spring-movable crossing or switch device, assigned to which are rail sections such as wing rails issuing from a first plate such as a ribbed plate, characterized in that the support element is fluid-supported such that in the event of static loading a desired vertical adjustment is effected and in the event of dynamic loading a fixedness is provided.

3. Support element according to claim 1 or 2, characterized in that the part of the railway switch (20) is disposed on several second plates (22) such as sliding plates arranged behind one another in the longitudinal direction of the railway switch part, the sliding plates being disposed for their part on the spacers (24), the spacers being automatically vertically adjustable in the event of static loading such that taking account of the geometry of the part of the railway switch and the inherent rigidity of the part of the railway switch the latter is disposed on the second plates without any gap.

4. Support element according to at least one of the preceding claims, characterized in that the support element, preferably its spacer (24), is clamped or pressed in the first plate such as a ribbed plate (14).

5. Support element according to at least one of the preceding claims, characterized in that the support element, preferably its spacer (24), extends sectionwise underneath the rail sections such as wing rails (16, 18).

6. Support element according to at least claim 2, characterized in that the support element is supported indirectly or directly via a fluid such as a hydraulic fluid, which can be supplied from the area underneath the support element via a regulating valve or a non-return valve to a buffer vessel, which for its part can be acted upon by pressure via a spring-pretensioned piston.

## Revendications

1. Support (22, 24) d'un élément mobile de voie, en particulier d'un bloc (20) d'un coeur mobile élastique ou d'un dispositif de changement de voie, auquel sont associés des éléments de voie, tels que des pattes de lièvre (16, 18) montées sur une première plaque (14) par exemple une plaque à nervures,
caractérisé en ce que
le support comprend une seconde plaque (22) soutenant l'élément mobile de voie (20) ainsi qu'une couche intermédiaire (24) faite d'un matériau à rigidité élastique fonction de la charge, telle que cette rigidité soit faible sous une charge statique et forte sous une charge dynamique.

2. Support d'un élément mobile de voie, en particulier d'un bloc d'un coeur mobile élastique ou d'un dispositif de changement de voie, auquel sont associés des éléments de voie, tels que des pattes de lièvre montées sur une première plaque par exemple une plaque à nervures,
caractérisé en ce que
le support repose sur une suspension à fluide assurant un déplacement vertical voulu sous une charge statique mais une absence de déplacement sous une charge dynamique.

3. Support selon la revendication 1 ou 2,
caractérisé en ce que
l'élément mobile de voie (20) est monté sur plusieurs secondes plaques (22) disposées les unes derrière les autres selon la direction longitudinale de l'élément, telles que des plaques de glissement qui elles-mêmes sont placées sur les couches intermédiaires (24) qui se déplacent verticalement et automatiquement sous une charge statique de manière que, compte tenus de la géométrie et de la rigidité propre de l'élément mobile, celui-ci repose sans intervalle sur les plaques (22).

4. Support selon au moins une des revendications précédentes,
caractérisé en ce que
le support, de préférence au niveau de sa couche intermédiaire (24) est en tension ou comprimé sur la première plaque telle que la plaque à nervures (14).

5. Support selon au moins une des revendications précédentes,
caractérisé en ce que
le support, de préférence au niveau de sa couche intermédiaire (24) se trouve partiellement en dessous d'éléments de voie tels que les pattes de lièvre (16, 18).

6. Support selon au moins la revendication 2,
caractérisé en ce que
le support est soutenu directement ou indirectement par un fluide tel qu'un fluide hydraulique qui, à partir d'une zone située sur le support peut être amené par l'intermédiaire d'une vanne ou d'une soupape antiretour à un réservoir amortisseur lui-même mis sous pression par un piston à précontrainte élastique.
